(19) **Europäisches Patentamt / European Patent Office / Office européen des brevets**

(11) **EP 4 726 435 A1**

(12) # EUROPEAN PATENT APPLICATION
published in accordance with Art. 153(4) EPC

(43) Date of publication:
**15.04.2026 Bulletin 2026/16**

(21) Application number: **24822292.9**

(22) Date of filing: **04.03.2024**

(51) International Patent Classification (IPC):
***G01S 13/90*** (2006.01)

(52) Cooperative Patent Classification (CPC):
**G01S 13/90**

(86) International application number:
**PCT/CN2024/079829**

(87) International publication number:
**WO 2024/255334 (19.12.2024 Gazette 2024/51)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **14.06.2023 CN 202310705921**

(71) Applicant: **ZTE CORPORATION
Shenzhen, Guangdong 518057 (CN)**

(72) Inventor: **ZHANG, Yongliang
Shenzhen, Guangdong 518057 (CN)**

(74) Representative: **Ziebig Hengelhaupt Intellectual
Property Attorneys
Patentanwaltskanzlei PartGmbB
Leipziger Straße 49
10117 Berlin (DE)**

(54) **INFORMATION SENSING METHOD BASED ON ELECTROMAGNETIC WAVES, AND DEVICE AND STORAGE MEDIUM**

(57) Provided in the present application are an information sensing method based on electromagnetic waves, and a device and a storage medium. The method is applied to a terminal device, the terminal device is configured with a transmitting antenna array and a receiving antenna array of electromagnetic waves, and the electromagnetic waves are millimeter waves or terahertz waves. The method comprises: transmitting a sensing detection sequence signal on the basis of the transmitting antenna array; on the basis of a receiving antenna array, receiving, in segments, a sensing echo sequence signal which is formed by means of reflection after the sensing detection sequence signal reaches a target object; performing division to obtain a plurality of virtual imaging areas on the basis of the sensing echo sequence signal, which is received in segments; and on the basis of signal parameters, corresponding to pixel grid units in each virtual imaging area, of the sensing echo sequence signal, which is received in segments, generating a near-field image sequence of the target object relative to each virtual imaging area.

Fig. 1

**Description**

**CROSS REFERENCES**

The present invention claims priority from a Chinese patent application submitted to the China National Intellectual Property Administration on Jun. 14, 2023, with the application number 202310705921.7 and the title "Information Sensing Method Based on Electromagnetic Waves, and Device and Storage Medium", the disclosure of which is hereby incorporated by reference herein in its entirety.

**FIELD OF THE INVENTION**

The present application relates to the field of terminal application technology, particularly to an information sensing method based on electromagnetic waves, and a device and a storage medium.

**BACKGROUND OF THE INVENTION**

With the development of Artificial Intelligence (AI) technology, increasingly more AI-based applications, such as face recognition, gesture recognition and liveness detection, are implemented on a terminal device.
The vast majority of AI applications on the terminal device rely on sensing user information. The current common way of sensing user information is mainly based on a camera and an under-display fingerprint sensor of the terminal device, which will more or less affect screen display.
Therefore, the technical problem to be solved by the present application is how to make the terminal device sense information of a target object without affecting screen display.

**CONTENTS OF THE INVENTION**

The purpose of the present application is to provide an information sensing method based on electromagnetic waves, and a device and a storage medium, so as to enable a terminal device to sense information of a target object without affecting screen display.
In order to achieve the above purpose, an example of the present application is implemented as follows:
In a first aspect, the present application provides an information sensing method based on electromagnetic waves, which is applied to a terminal device, wherein the terminal device is configured with a transmitting antenna array and a receiving antenna array of millimeter or terahertz electromagnetic waves. The method comprises the following steps: transmitting a sensing detection sequence signal on the basis of the transmitting antenna array; on the basis of the receiving antenna array, receiving, in segments, a sensing echo sequence signal which is formed by means of reflection after the sensing detection sequence signal reaches a target object; performing division to obtain a plurality of virtual imaging areas on the basis of the sensing echo sequence signal received in segments, wherein each virtual imaging area is composed of pixel grid units; and on the basis of signal parameters, corresponding to pixel grid units in each virtual imaging area, of the sensing echo sequence signal received in segments, generating a near-field image sequence of the target object relative to each virtual imaging area.
In a second aspect, the present application provides a terminal device including a processor, wherein the terminal device is configured with a transmitting antenna array and a receiving antenna array of millimeter or terahertz electromagnetic waves, which are set in a non-Active Area (non-AA) of the screen of the terminal device. In the terminal device, the transmitting antenna array is used to transmit a sensing detection sequence signal; the receiving antenna array is used to receive, in segments, a sensing echo sequence signal which is formed by means of reflection after the sensing detection sequence signal reaches a target object; the processor is used to perform division to obtain a plurality of virtual imaging areas on the basis of the sensing echo sequence signal received in segments, wherein each of the plurality of virtual imaging areas is composed of pixel grid units; and the processor is also used to, on the basis of signal parameters, corresponding to the pixel grid units in each virtual imaging area, of the sensing echo sequence signal received in segments, generate a near-field image sequence of the target object relative to each virtual imaging area.
In a third aspect, the present application provides an electronic device including a memory, a processor, and computer programs stored in the memory and executable by the processor, wherein the method of the first aspect is implemented when the computer programs are executed by the processor.
In a fourth aspect, the present application provides a computer-readable storage medium for storing computer programs therein, which implement the method of the first aspect when executed by the processor.

# EP 4 726 435 A1

## BRIEF DESCRIPTION OF THE DRAWINGS

In order to more clearly illustrate technical solutions in the examples of the present application or in the prior art, the drawings required for describing the examples or the prior art will be briefly introduced below. Obviously, the drawings described below are only in some examples of the present application, and those of ordinary skill in the art can also obtain other drawings based on these drawings without carrying out creative work.

Fig. 1 is a flowchart of the information sensing method based on electromagnetic waves according to an example of the present application.

Fig. 2 is a schematic diagram of a first layout of the electromagnetic-wave antenna arrays of the terminal device according to an example of the present application.

Fig. 3 is a schematic diagram of a second layout of the electromagnetic-wave antenna arrays of the terminal device according to an example of the present application.

Fig. 4 is a schematic diagram of using the information sensing method to obtain virtual imaging areas by division according to an example of the present application.

Fig. 5 is a schematic diagram of a third layout of the electromagnetic-wave antenna arrays of the terminal device according to an example of the present application.

Fig. 6 is a schematic diagram of a fourth layout of the electromagnetic-wave antenna arrays of the terminal device according to an example of the present application.

Fig. 7 is a schematic diagram of a structure of the user information sensing device based on electromagnetic waves according to an example of the present application.

Fig. 8 is a schematic diagram of a structure of the electronic device according to an example of the present application.

## DETAILED DESCRIPTION OF THE EMBODIMENTS

As mentioned earlier, with the development of AI technology, increasingly more AI-based applications, such as face recognition, gesture recognition and liveness detection, are implemented on a terminal device.

The vast majority of AI applications on the terminal device rely on sensing user information. The current common way of sensing user information is mainly based on a camera and an under-display fingerprint sensor of the terminal device, which will more or less affect screen display. For example, the screen will enter a shooting interface when the camera is turned on for face recognition, and users may cover a part of the display area of the screen when placing their fingers on the screen for fingerprint recognition.

In view of this, the present application proposes a novel user information sensing solution for the terminal device. Specifically, the present application deploys an antenna array (comprising a transmitting antenna array and a receiving antenna array) of high-frequency electromagnetic waves such as millimeter waves and terahertz waves in the non-AA of the screen of the terminal device, so as to scan a target object (such as a user) through the antenna array of electromagnetic waves and then conduct two-Dimensional/three-Dimensional (2D/3D) modeling to obtain a near-field image of the target object, which can be used in related AI applications such as gesture recognition, face recognition, and liveness detection. In the entire process, the user is not required to activate the camera or touch the fingerprint sensor on the screen, which reduces the impact on screen display to a certain extent.

In order to enable a person skilled in the art to better understand technical solutions in this specification, a clear and complete description of the technical solution in an example of the present application will be provided below in conjunction with the drawings therein. Obviously, the described examples are only some, rather than all, of the examples of this specification. All other examples obtained by those of ordinary skill in the art based on the examples in this specification without carrying out creative work shall fall within the scope of protection of this specification.

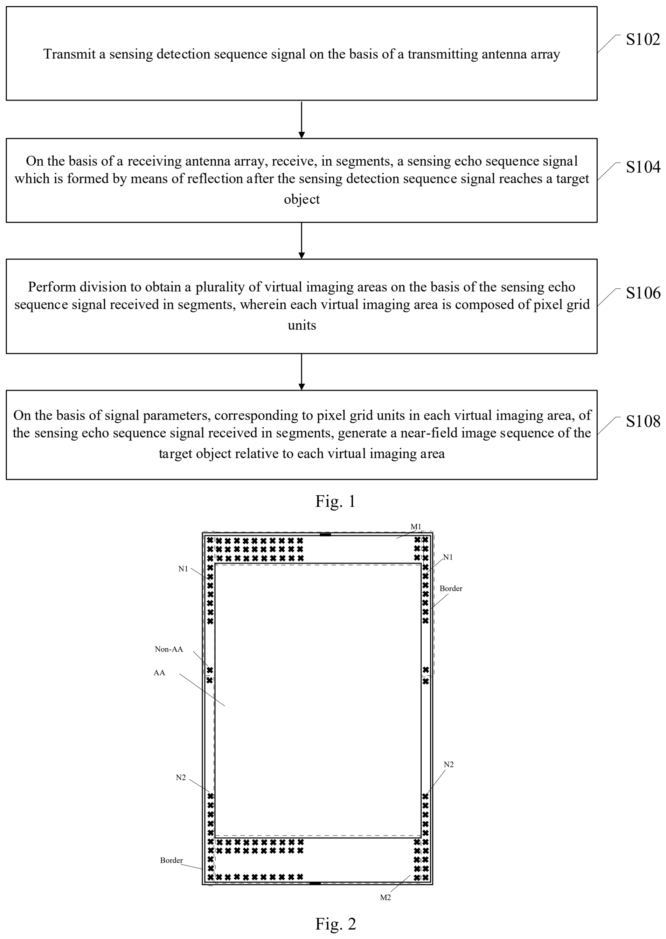

On one hand, an example of the present application provides an information sensing method based on electromagnetic waves, which is applied to a terminal device, the terminal device being configured with a transmitting antenna array and a receiving antenna array of electromagnetic waves. Fig. 1 is a flowchart of the information sensing method, which comprises the following steps:

S102: Transmitting a sensing detection sequence signal on the basis of the transmitting antenna array

It should be understood that the sensing detection sequence signal is composed of electromagnetic wave signals with a consecutive time sequence. For example, with seconds as the temporal granularity, a sensing detection sequence signal with a duration of 10 s is composed of electromagnetic wave signals from the 1st second to the 10th second.

In an example, the transmitting antenna array can be set in a non-AA of the screen of the terminal device, and/or in a gap area between the screen and the border, so as not to affect the normal display of the screen.

In an exemplary embodiment, in order to reduce hardware costs, the transmitting antenna array can be multiplexed as a communication antenna of the terminal device, thereby achieving the effect of integrated sensing and communication (integration of communication technology and sensing technology).

S104: On the basis of the receiving antenna array, receiving, in segments, a sensing echo sequence signal which is formed by means of reflection after the sensing detection sequence signal reaches a target object

It should be understood that the sensing echo sequence signal is composed of echo signals with a consecutive time sequence. For example, with seconds as the temporal granularity, a sensing echo sequence signal with a duration of 5 s is composed of echo signals from the 1st second to the 5th second.

In an example, the receiving antenna array is set in a non-AA of the screen of the terminal device, and/or in a gap area between the screen and the border, so as not to affect the normal display of the screen.

In an exemplary embodiment, in order to reduce hardware costs, the receiving antenna array can be multiplexed as a communication antenna of the terminal device, thereby achieving the effect of integrated sensing and communication.

S106: Performing division to obtain a plurality of virtual imaging areas on the basis of the sensing echo sequence signal received in segments, wherein each virtual imaging area is composed of pixel grid units

It should be understood that the virtual imaging area mentioned in this specification refers to an imaging area independent of the terminal device, rather than a display area of the screen, the imaging area being obtained by virtual division based on the deployment positions of the transmitting antenna array and the receiving antenna array, and on the transmission and reception modes of electromagnetic waves. Grid division is performed on each virtual imaging area in pixels, thus obtaining the pixel grid units described in this specification.

The division of the virtual imaging areas depends on the deployment positions of the transmitting antenna array and the receiving antenna array, and on the transmission and reception modes of electromagnetic waves, and will not be specified in this specification.

In an exemplary embodiment:

There are no less than two transmitting antenna arrays and no less than two receiving antenna arrays. Correspondingly, the terminal device is provided with the first, second, and third transmission and reception modes of electromagnetic waves according to the deployed transmitting antenna arrays and receiving antenna arrays.

In the first mode, each transmitting antenna array transmits the sensing detection sequence signals according to a consecutive time sequence, and each receiving antenna array separately receives the sensing echo sequence signals corresponding to the sensing detection sequence signals transmitted by each transmitting antenna array according to a consecutive time sequence; for example, a first transmitting antenna array first transmits a sensing detection sequence signal, and after the completion of this transmission, a second transmitting antenna array transmits a sensing detection sequence signal...; in this process, the sensing echo sequence signals received by each receiving antenna array and originating from different transmitting antenna arrays also have a consecutive time sequence. In the second mode, each transmitting antenna array transmits the sensing detection sequence signals independently of each other, and each receiving antenna array receives the sensing echo sequence signals originating from each transmitting antenna array; that is, with the same time sequence, each receiving antenna array can receive the sensing echo sequence signals originating from different transmitting antenna arrays.

In the third mode, the transmitting antenna arrays and the receiving antenna arrays are divided into groups corresponding to each other, wherein each transmitting antenna array transmits the sensing detection sequence signals independently of each other, and each receiving antenna array receives the sensing echo sequence signals originating from the transmitting antenna array in the corresponding group. For example, if a first transmitting antenna array and a first receiving antenna array are grouped together, the first receiving antenna array will only receive the sensing echo sequence signal originating from the first transmitting antenna array.

For ease of understanding, a first transmitting antenna array N1 and a second transmitting antenna array N2, as well as a first receiving antenna array M1 and a second receiving antenna array M2 are used as an example here for illustration.

In the first mode, division is performed in this example to obtain virtual imaging areas, i.e. the two virtual imaging areas of N*M1 and N*M2, on the basis of the sensing echo sequence signals received by the first receiving antenna array M1 and corresponding to the sensing detection sequence signals N with a consecutive time sequence (the sensing detection sequence signals N are composed of the sensing detection sequence signals N1 and N2 with a consecutive time sequence), and on the basis of the sensing echo sequence signals received by the second receiving antenna array M2 and corresponding to the sensing detection sequence signals with a consecutive time sequence.

In the second mode, division is performed in this example to obtain virtual imaging areas, i.e. the four virtual imaging areas of N1*M1, N1*M2, N2*M1 and N2*M2, on the basis of the sensing echo sequence signals received by the first receiving antenna array M1 and originating from the first transmitting antenna array N1, the sensing echo sequence signals received by the first receiving antenna array M1 and originating from the second transmitting antenna array N2, the sensing echo sequence signals received by the second receiving antenna array M2 and originating from the first transmitting antenna array N1, and the sensing echo sequence signals received by the second receiving antenna array M2 and originating from the second transmitting antenna array N2.

In the third mode, division is performed in this example to obtain virtual imaging areas, i.e. the two virtual imaging areas of N1*M1 and N2*M2, on the basis of the sensing echo sequence signals received by the first receiving antenna array M1 and originating from the first transmitting antenna array N1, and the sensing echo sequence signals received by the second receiving antenna array M2 and originating from the second transmitting antenna array N2.

It should be understood that the virtual imaging areas obtained by division are used to present a part of the near-field image sequence of the target object.

S108: On the basis of signal parameters, corresponding to pixel grid units in each virtual imaging area, of the sensing echo sequence signal received in segments, generating a near-field image sequence of the target object relative to each virtual imaging area

In an example, first, a heterodyne mixing signal of the pixel grid units in each virtual imaging area can be determined based on a near-field spherical wavefront of the echo signal sequence received in segments; next, a virtual array compensation vector is determined based on time delay of elements in the receiving antenna array relative to the pixel grid units in each virtual imaging area, and the heterodyne mixing signal of the pixel grid units in each virtual imaging area is compensated based on the virtual array compensation vector; next, coherent superposition is performed on the compensated heterodyne mixing signal of the pixel grid units in each virtual imaging area, and then signal parameters, corresponding to the pixel grid units in each virtual imaging area, of the sensing echo sequence signal received in segments can be determined, the signal parameters including signal amplitude and signal phase.

After the signal parameters, corresponding to the pixel grid units in each virtual imaging area, of the sensing echo sequence signal received in segments are obtained, a near-field image sequence relative to each virtual imaging area can be generated based on the signal parameters of the pixel grid units. An exemplary introduction is as follows:

In an example, the signal parameters, corresponding to the pixel grid units in each virtual imaging area, of the sensing echo sequence signal received in segments can be mapped to a spatial coordinate system (3D or 2D) for image scanning and modeling, thereby generating a near-field image sequence relative to each virtual imaging area.

In another example, the near-field image sequence relative to each virtual imaging area can also be generated based on AI. That is, the Fourier transform is performed on the signal parameters, corresponding to the pixel grid units in each virtual imaging area, of the sensing echo sequence signal received in segments to obtain frequency domain feature data; next, the frequency domain feature data is inputted into a Convolutional Neural Network (CNN) model, which then predicts the near-field image sequence relative to each virtual imaging area based on the frequency domain feature data. The CNN model is obtained through training based on the frequency domain feature data corresponding to a sample sensing echo sequence signal, and on a near-field image sequence label annotated by the sample sensing echo sequence signal. In the training process, after the frequency domain feature data corresponding to the sample sensing echo sequence signal is inputted into the CNN model, the model will provide a predicted value of the near-field image sequence; next, the error between the predicted value and the true value of the annotated near-field image sequence is calculated, and with the aim of reducing the error, multiple rounds of iterative optimization are performed on parameters of the CNN model, thereby making the predicted value of the CNN model approach the true value, i.e. making the CNN model learn how to convert the frequency domain feature data into near-field image representation.

In an example, based on the near-field image sequence of a target object, AI applications such as gesture recognition, face recognition and liveness detection can be applied to the target object.

Face recognition is taken here as an example. First, a target image, with standard clarity, in the near-field image sequence of a 3D target object is inputted into a faster region CNN used for face recognition, so as to attempt encoding a facial region in the target image (the faster region CNN can take the facial region in the image as a region of interest for encoding) to obtain the corresponding encoding results; next, the encoding results can be inputted into a classifier used for face recognition to complete face recognition.

In an example, the Fast Fourier Transform (FFT) can also be performed on the sensing echo sequence signal received in segments, thus obtaining a frequency domain signal sequence that presents the relationship between the chest distance of the target object and a pulse peak; next, the heartbeat signal and/or respiration signal of the target object can be determined, i.e. health information of the user can be sensed, based on a pre-set quantitative relationship between the phase change in the frequency domain signal sequence and the chest displacement.

In another example, the near-field image sequences corresponding to a plurality of virtual imaging areas can also be stitched together, thus obtaining a stitched near-field image sequence of the target object; next, based on the stitched near-field image sequence, AI applications such as gesture recognition, face recognition and liveness detection can be applied to the target object.

Specifically, in the stitching process, registration of the near-field image sequences of a plurality of virtual imaging areas is required. Registration refers to matching near-field image sequences of different images in spatial positions. After the registration is completed, the near-field image sequences of the plurality of virtual imaging areas can be stitched according to the correct spatial position.

In an exemplary embodiment, registration can be performed through the following two methods:

Method 1: Performing registration based on a translation vector

That is, the near-field image sequences corresponding to at least some of the virtual imaging areas are mapped to a frequency domain, and then a translation vector, relative to the frequency domain, of the near-field image sequences corresponding to at least some of the virtual imaging areas is calculated based on a cross-power spectral density function; next, based on the translation vector, registration is performed on the near-field image sequences corresponding to at least some of the virtual imaging areas.

Method 2: Performing registration based on a common feature point

That is, a common feature point between the near-field image sequences corresponding to at least some of the virtual imaging areas is determined based on a time domain; next, taking the common feature point as a reference, registration is performed on the near-field image sequences corresponding to at least some of the virtual imaging areas.

After the registration is completed, image stitching and fusing are also required to convert the near-field image sequence of a plurality of virtual imaging areas into a stitched near-field image of a target object, and optionally a plurality of stitched near-field image sequences regarding the target object are generated based on the near-field image sequence corresponding to a plurality of virtual imaging areas and generated multiple times.

Next, based on the stitched near-field image sequence, AI applications such as gesture recognition, face recognition and liveness detection can be applied to a target object.

Face recognition is taken here as an example. First, the near-field image sequence of a 3D target object is inputted into a faster region CNN used for face recognition, so as to attempt encoding a facial region in the near-field image sequence (the faster region CNN can take the facial region in the image as a region of interest for encoding) to obtain the corresponding encoding results; next, the encoding results can be inputted into a classifier used for face recognition to complete face recognition.

In an example, FFT can also be performed on the sensing echo sequence signal received in segments, thus obtaining a frequency domain signal sequence that presents the relationship between the chest distance of the target object and a pulse peak; next, the heartbeat signal and/or respiration signal of the target object can be determined, i.e. health information of the user can be sensed, based on the pre-set quantitative relationship between the phase change in the frequency domain signal sequence and the chest displacement.

The information sensing method of this example will be introduced below in combination with application scenarios.

Application scenario 1

In Application scenario 1, a transmitting antenna array and a receiving antenna array of electromagnetic waves are deployed in non-AAs in the front of the screen of a terminal device. The transmitting antenna array adopts a Uniform Linear Array (ULA), and is specifically set in non-AAs on the lower half and both sides of the lower half of the screen; and the receiving antenna array adopts a Uniform Planar Array (UPA), and is specifically set in non-AAs at the top and bottom of the screen.

As shown in Fig. 2, the transmitting antenna array specifically comprises a first transmitting antenna array N1 (in this specification, N1 is also used to represent the number of elements in the first transmitting antenna array) and a second transmitting antenna array N2 (in this specification, N2 is also used to represent the number of elements in the second transmitting antenna array); in the case where the receiving antenna array specifically comprises a first receiving antenna array M1 (in this specification, M1 is also used to represent the number of elements in the first receiving antenna array) and a second receiving antenna array M2 (in this specification, M2 is also used to represent the number of elements in the second receiving antenna array), the first transmitting antenna array N1 is set in non-AAs on both sides of the upper half of the screen, the second transmitting antenna array N2 is set in non-AAs on both sides of the lower half of the screen, the first receiving antenna array M1 is set in a non-AA at the top of the screen, and the second receiving antenna array M2 is set in a non-AA at the bottom of the screen.

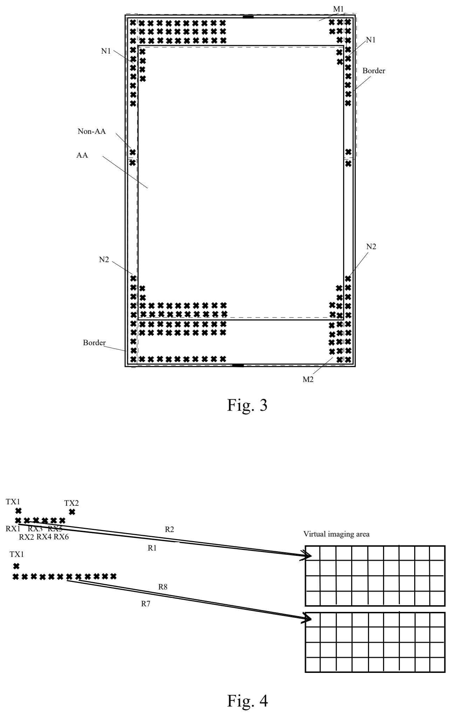

In addition, as shown in Fig. 3, if the area of non-AAs of the screen is limited, the transmitting antenna arrays (N1, N2) and the receiving antenna arrays (M1, M2) can also have some elements deployed at the edges in the AA to minimize the impact on screen display while ensuring sufficient elements.

On the basis of the above, a Multiple-in Multipleout (MIMO) array mode is adopted for the transmitting antenna array and the receiving antenna array in Application scenario 1. For example, the horizontal elements are arranged equidistant at a spacing of 1/2 wavelength (the spacing can also be 1/4 wavelength, but should not be too small, otherwise it will cause serious mutual interference); the vertical elements can be arranged equidistant at a spacing of 1/2 wavelength, indicating that under normal conditions, the spacing between the vertical elements can be appropriately increased to reduce power consumption while meeting the imaging resolution requirements.

Correspondingly, based on the layout structure shown in Fig. 2 or 3, the process of constructing a near-field image sequence comprises the following steps:

S1: The transmitting antenna arrays on both sides of the screen transmit electromagnetic wave sequences, and the receiving antenna arrays at the top and bottom of the screen receive, in segments, the corresponding echo signal sequences.

As mentioned earlier, there are three transmission and reception modes of electromagnetic waves:

In the first mode, N (N = N1+N2) elements on the vertical left and right sides of the screen transmit electromagnetic wave signal sequences; correspondingly, first M1 elements at the horizontal top of the screen receive echoes in segments, and then M2 elements at the horizontal bottom of the screen receive echoes in segments.

In the second mode, N1 elements on the vertical left and right sides of the upper half of the screen transmit electromagnetic wave signal sequences, and the echoes are received by M1 elements at the horizontal top of the screen and M2 elements at the horizontal bottom of the screen; meanwhile, N2 elements on the vertical left and right sides of the lower half of the screen transmit electromagnetic wave signal sequences, and the echoes are received in segments by M1 elements at the horizontal top of the screen and M2 elements at the horizontal bottom of the screen.

In the third mode, N1 elements on the vertical left and right sides of the upper half of the screen transmit electromagnetic wave signal sequences, and the echoes are received in segments by M1 elements at the horizontal top of the screen; meanwhile, N2 elements on the vertical left and right sides of the lower half of the screen transmit electromagnetic wave signal sequences, and the echoes are received in segments by M2 elements at the horizontal bottom of the screen.

S2: Division is performed on a segmented echo information array, which is formed by the receiving array receiving echoes in segments, to obtain several virtual imaging areas.

It should be noted that considering the large distance between M1 and M2, the method adopted in this application scenario is to obtain a plurality of virtual imaging areas by division and then stitch them together, thereby determining the near-field image sequence of the target object.

Based on the aforementioned principle, the following virtual imaging areas are obtained by division in the three modes in step S1:

Two virtual imaging areas, N*M1 and N*M2, are obtained by division in the first mode;
four virtual imaging areas, N1*M1, N1*M2, N2*M1 and N2*M2, are obtained by division in the second mode; and
two virtual imaging areas, N1*M1 and N2*M2, are obtained by division in the third mode.

S3: Division is further performed on each virtual imaging area to obtain several pixel grid unit points, and the amplitude and phase values of signals of each pixel grid unit point are obtained by heterodyne mixing.

The electromagnetic wave imaging technology, relying on the heterodyne mixing technology, is achieved by measuring a complex signal containing amplitude and phase information. That is, an antenna transmits an electromagnetic wave signal; after the electromagnetic wave signal is transmitted onto a target for imaging, a receiving antenna receives an echo signal reflected by the target; the amplitude and phase values of the reflected signal are obtained based on the heterodyne mixing technology, with which the echo signal and the transmitted signal are received.

Based on the division performed in step S2 to obtain virtual imaging areas, it is necessary to mix the echo signals received by the receiving array in the areas with the transmitted signals transmitted by the transmitting array to obtain a heterodyne mixing signal, and then extract the amplitude and phase values of the signal. This specific process has been introduced earlier and will not be repeated here.

S4: Traversal is performed across each virtual imaging area to complete the image reconstruction of each virtual imaging area.

Based on the three modes in step S1, traversal is performed on subareas of each virtual imaging area; that is, phase mixing compensation and sidelobe suppression traversal are performed on the two virtual imaging areas of N*M1 and N*M2, the four virtual imaging areas of N1*M1, N1*M2, N2*M1 and N2*M2, and the two virtual imaging areas of N1 *M1 and N2*M2, thereafter obtaining the x-axis, y-axis, and z-axis values of the imaging grid unit points. Then, planar scanning results (in addition to the 2D image data x and y, there is also a scattering coefficient, with the scattering coefficient as a z-axis value) within a limited range after the selection of a reference point of elements are arranged layer by layer based on the 3D coordinate axes, or cylindrical scanning is performed, thus generating complete cloud data of 3D coordinate points. Next, 3D reconstruction of the image is completed after the steps including feature extraction, image registration, stitching, fusion, etc.; 2D reconstruction of the image only focuses on processing the x-axis and y-axis values, omitting processing the z-axis values.

S5: Image stitching and synthesis are performed on each virtual imaging area to achieve complete target image reconstruction.

As for the first two modes in step S1, the first mode requires stitching and synthesis to be performed on 3D reconstructed images of the two imaging areas N*M1 and N*M2, and the second mode requires stitching and synthesis to be performed on 3D reconstructed images of the four imaging areas N1*M1, N1*M2, N2*M1 and N2*M2. Because correlation points can be determined in terms of the distances between N*M1 and N*M2, N1*M1 and N2*M1, and N1*M2 and N2*M2, the stitching and synthesis can be achieved. Overall, large aperture virtual imaging of N*M elements is finally achieved through N+M elements, and the imaging resolution will be improved since the higher the frequency band of electromagnetic waves, the smaller the wavelength of elements, and the more elements there are per unit area.

Due to the fact that at the top and bottom of the screen are two independent receiving area arrays, it is essential to perform image stitching in step S5 for the first two modes in step S1. Due to the pure 2D translation relationship between the receiving area arrays M1 and M2 in these two modes, FFT is performed on the images received by the receiving arrays M1 and M2 based on the phase correlation method, then two images to be registered are transformed to the frequency domain, and then a translation vector between the two images is directly calculated based on their cross-power spectrum, thereby achieving fast image registration. However, compared with the stitching process of N*M1 and N*M2 in the first mode, the stitching process of N1*M1, N1*M2, N2*M1 and N2*M2 in the second mode is more complex, wherein it is necessary to stitch N1*M2 and N2*M2 into N*M2 while stitching N1*M1 and N2*M2 into N*M1, and then stitch N*M1 and N*M2 (it is also possible to stitch N1*M1 and N2*M2 into N2*M while stitching N1*M1 and N2*M1 into N1*M, and then stitch N1*M and N2*M); that is, the second mode saves time in the former area array scanning stage but does not in the later image stitching stage. If the area of the screen of the terminal device is too large, the phase difference between M1 and M2 near fields in the first mode will be too large, and phase compensation will be difficult, so the second mode needs to be adopted. Since the phase correlation method relies on registered images that require a large overlap ratio, it is also possible to use a time-domain based method to first identify feature points (e.g. boundary points and inflection points) in two images and determine the correspondence between the feature points in the images, and then use this correspondence to find the transformation relationship between the two images for image registration and stitching.

The third mode is suitable for processing two independent imaging areas because there are few phase-related or feature-related elements between N1*M1 and N2, M2. For example, the virtual imaging area of N1*M1 is suitable for gesture recognition, while the virtual imaging area of N2*M2 is suitable for face recognition.

Large aperture virtual imaging of N*M elements is achieved in this application scenario for N+M elements, which can be compared and explained based on real aperture imaging.

The process of the real aperture imaging is as follows: Echo signals are mixed to obtain a heterodyne mixing signal; FFT is performed on the heterodyne mixing signal to obtain distance dimension information; a corresponding phase compensation vector is obtained based on the time delay of different elements reaching the same pixel grid unit point; the compensation vector is used to compensate and sum the data in the same distance unit in each channel, thus obtaining the pixel signal; and traversal is performed on all associated pixels to complete image reconstruction. The premise of real aperture imaging is that the path difference between any two elements cannot be greater than a distance resolution unit, otherwise different elements may arrive at an equiphase surface of the array at different times, resulting in an aperture transit effect. The so-called aperture transit effect refers to the following phenomenon: When the distance from a target to the center of an array is $r \le 2L^2 / \lambda$, the target is located in the near-field imaging area of the array; under near-field conditions, the phase difference between elements is affected by a joint effect of the spatial angle and distance of the target relative to the array, and the signal received by the array has no longer a planar wavefront, but a spherical wavefront, which requires a phase compensation vector.

To address the aperture transit effect, a corresponding phase compensation vector needs to be obtained based on the time delay of elements reaching the same pixel grid unit point at each sampling instant, then heterodyne mixing signals from different channels are compensated and summed, and finally FFT is performed on the compensated signals to obtain distance dimension information of the target.

On the basis of the above, if there is an issue of aperture transit effect in this application scenario, the corresponding operation can be carried out in the same way as in the real aperture imaging to address the aperture transit effect.

Similarly, with the angle dimension resolution of real aperture imaging directly proportional to the size of an array aperture, if the antenna located in the front of the screen of the terminal device is arranged, based on the Antenna on Display (AoD) technology, in the form of an under-display antenna with a half-wavelength equidistant uniform surface, there will be too many elements and channels, making cost and power consumption pose serious challenges to the terminal device. Therefore, N+M elements can be used to achieve MIMO large aperture array virtual imaging of N*M elements, thereby avoiding cost and power consumption issues while improving resolution.

Fig. 4 is a schematic diagram of determining virtual imaging areas in an MIMO array mode. In Fig. 4, MIMO adopts a ULA with 2 transmitting elements and 6 receiving elements (wherein a bold cross represents an element), with the spacing between the receiving elements being 3 times the wavelength; under far-field conditions, the distance differences between R1 and R2 and between R7 and R8 can be considered equal, and therefore the array can be equivalent to a uniform virtual linear array with 1 transmitting element and 12 receiving elements. However, under near-field conditions, the distance differences between them are different and the array cannot be equivalent to a uniform virtual linear array, so a more accurate virtual array steering vector is determined based on the phase relationship between them.

When TX1 element is transmitting, a receiving element steering vector is as follows:

$$a_1 = [1, e^{j2\pi f_c \Delta t_2}, e^{j2\pi f_c \Delta t_3}, e^{j2\pi f_c \Delta t_4}, e^{j2\pi f_c \Delta t5}, e^{j2\pi f_c \Delta t_6}]^T \qquad (1)$$

wherein Δt2-Δt6 represent time delay differences of the 2nd to 6th elements relative to a reference receiving element, including angle information θ of grid unit points in the imaging area relative to the array.

When TX2 element is transmitting, the receiving element steering vector is as follows:

$$a_2 = [1, e^{j2\pi f_c \Delta t_2}, e^{j2\pi f_c \Delta t_3}, e^{j2\pi f_c \Delta t_4}, e^{j2\pi f_c \Delta t5}, e^{j2\pi f_c \Delta t_6}]^T e^{j2\pi f_c \Delta T_2} \qquad (2)$$

wherein ΔT2 represents the time delay difference of the 2nd transmitting element relative to a reference transmitting element. Correspondingly, a receiving steering vector array is as follows:

$$A = [a_1, a_2]^T \qquad (3)$$

In the case of N electromagnetic wave elements on both vertical sides of the screen, the corresponding receiving steering vector is as follows:

$$A = [a_1, a_2, \ldots, a_N]^T \qquad (4)$$

A Frequency Modulated Continuous Wave (FMCW) signal transmitted by each electromagnetic wave element on both vertical sides of the screen is as follows:

$$s(\hat{t}) = rect(\frac{\hat{t}}{T_p})e^{j2\pi(f_c \hat{t} + \frac{1}{2}\gamma \hat{t}^2)}, 0 < \hat{t} < T_P \qquad (5)$$

wherein $\hat{t}$ is the snapshot time, rect(t) is the rectangular window function, fc is the carrier frequency, $\gamma$ is the frequency modulation slope, and Tp is the frequency modulation period.

According to the imaging technology based on dividing areas at the top and bottom of the screen proposed by the present invention, a signal, transmitted by a transmitting element $a_i$ and then going through a pixel grid unit point $n_1$ in a virtual imaging area, finally returns to a top receiving element $a_{rtop}$ and a bottom receiving element $a_{rbot}$, and can be respectively represented as follows:

$$s(a_i, n_1, a_{rtop}, \hat{t}) = U_{a_i n_1 a_{rtop}} rect(\frac{\hat{t} - \tau_{i,1,r_{top}}}{T_p})e^{j2\pi(f_c(\hat{t} - \tau_{i,1,r_{top}}) + \frac{1}{2}\gamma(\hat{t} - \tau_{i,1,r_{top}})^2)}, \hat{t} - \tau_{i,1,r_{top}} < \hat{t} < T_P \quad (6)$$

$$s(a_i, n_1, a_{rbot}, \hat{t}) = U_{a_i n_1 a_{rbot}} rect(\frac{\hat{t} - \tau_{i,1,r_{bot}}}{T_p})e^{j2\pi(f_c(\hat{t} - \tau_{i,1,r_{bot}}) + \frac{1}{2}\gamma(\hat{t} - \tau_{i,1,r_{bot}})^2)}, \hat{t} - \tau_{i,1,r_{bot}} < \hat{t} < T_P \quad (7)$$

wherein $\tau_{i,1,rtop/bot} = (R_{a_i n_1} + R_{a_r top/bot n_1})/c$ is the echo delay, c is the speed of light, and $U_{a_i n_1 a_r top/bot}$ is the echo amplitude, the amplitude being affected by the target distance, target scattering cross-sectional area, reflection coefficient, and single element directional pattern function.

$R_{a_i n_1}$, $R_{a_r top n_1}$ and $R_{a_r bot n_1}$ are the distances between the transmitting and receiving elements and the grid unit points, and respectively as follows:

$$R_{a_i n_1} = \sqrt{(x_{a_i} - x_{n_1})^2 + (y_{a_i} - y_{n_1})^2 + (z_{a_i} - z_{n_1})^2} \qquad (8)$$

$$R_{a_r top n_1} = \sqrt{(x_{a_r top} - x_{n_1})^2 + (y_{a_r top} - y_{n_1})^2 + (z_{a_r top} - z_{n_1})^2} \qquad (9)$$

$$R_{a_{r\text{bot}}n_l} = \sqrt{(x_{a_{r\text{bot}}} - x_{n_l})^2 + (y_{a_{r\text{bot}}} - y_{n_l})^2 + (z_{a_{r\text{bot}}} - z_{n_l})^2} \qquad (10)$$

wherein $(x_{n_l}, y_{n_l}, z_{n_l})$, $(x_{a_i}, y_{a_i}, z_{a_i})$, $(x_{a_r\text{top}}, y_{a_r\text{top}}, z_{a_r\text{top}})$ and $(x_{a_r\text{bot}}, y_{a_r\text{bot}}, z_{a_r\text{bot}})$ are respectively the coordinates of pixel grid unit point $n_l$, transmitting element $a_i$, and receiving elements $a_{r\text{top}}$ and $a_{r\text{bot}}$.

The heterodyne mixing signals obtained by mixing the echo signals, received by the receiving elements in the horizontal areas at the top and bottom of the screen, with the transmitted signals are as follows:

$$S_{if_{\text{top}}}(a_i, n_l, a_{r\text{top}}, \hat{t}) = s(a_i, n_l, a_{r\text{top}}, \hat{t}) \bullet s_{a_{r\text{top}}}^H(\hat{t})$$

$$= \sum_{l=1}^{N_{net\text{top}}} \sum_{i=1}^{N_{TX}} U_{a_i n_l a_{r\text{top}}} rect(\frac{\hat{t} - \tau_{i,l,r_{\text{top}}}}{T_p}) e^{j2\pi(-f_c\tau_{i,l,r_{\text{top}}} - \gamma\tau\hat{t} + \frac{1}{2}\gamma\tau_{i,l,r_{\text{top}}}^2)}, \tau_{i,l,r_{\text{top}}} < \hat{t} < T_p \qquad (11)$$

$$S_{if_{\text{bot}}}(a_i, n_l, a_{r\text{bot}}, \hat{t}) = s(a_i, n_l, a_{r\text{bot}}, \hat{t}) \bullet s_{a_{r\text{bot}}}^H(\hat{t})$$

$$= \sum_{l=1}^{N_{net\text{bot}}} \sum_{i=1}^{N_{TX}} U_{a_i n_l a_{r\text{bot}}} rect(\frac{\hat{t} - \tau_{i,l,r_{\text{bot}}}}{T_p}) e^{j2\pi(-f_c\tau_{i,l,r_{\text{bot}}} - \gamma\tau\hat{t} + \frac{1}{2}\gamma\tau_{i,l,r_{\text{bot}}}^2)}, \tau_{i,l,r_{\text{bot}}} < \hat{t} < T_p \qquad (12)$$

wherein $N_{nettop}$ and $N_{netbot}$ are respectively the total number of pixel grid units in the virtual imaging areas at the top and bottom of the screen, and $N_{TX}$ is the total number of emitting elements. For the virtual imaging area, the phase values to be compensated for the total number of transmitting elements are respectively as follows:

$$e^{j2\pi(f_c\tau_{i,l,r_{\text{top}}} + \gamma\tau\hat{t} - \frac{1}{2}\gamma\tau_{i,l,r_{\text{top}}}^2)} \qquad (13)$$

$$e^{j2\pi(f_c\tau_{i,l,r_{\text{bot}}} + \gamma\tau\hat{t} - \frac{1}{2}\gamma\tau_{i,l,r_{\text{bot}}}^2)} \qquad (14)$$

Due to the large distance between M1 and M2, there is a significant jump in the virtual imaging areas at the top and bottom of the screen corresponding to the coordinates of $a_{r\text{top}}$ and $a_{r\text{bot}}$. If the compensation is made from the beginning, due to the large span between the top and bottom areas, the compensation may not be sufficient, resulting in an unsatisfactory original image. Therefore, the top and bottom areas are separated for compensation, which facilitates a good foundation for image processing in the later stage.

The echo signals from Equations (4), (11) and (12) are used for near-field beamforming of the MIMO arrays. Here, the received signals of arrays at the top and bottom of the screen are respectively as follows:

$$x(\hat{t})_{\text{top}} = A_{\text{top}}(\theta)S_{if_{\text{top}}}(t) + n(t) \qquad (15)$$

$$x(\hat{t})_{\text{bot}} = A_{\text{bot}}(\theta)S_{if_{\text{bot}}}(t) + n(t) \qquad (16)$$

The signals received by each element are multiplied by the corresponding receiving channel weights, and the results are added up to achieve beamforming, with the received signals at the top and bottom of the screen respectively as follows:

$$y(\hat{t})_{\text{top}} = w_{\text{top}}^H x(\hat{t})_{\text{top}} = w_{\text{top}}^H A_{\text{top}}(\theta)S_{if_{\text{top}}}(t) + w_{\text{top}}^H n(t) \qquad (17)$$

$$y(\hat{t})_{\text{bot}} = w_{\text{bot}}^H x(\hat{t})_{\text{bot}} = w_{\text{bot}}^H A_{\text{bot}}(\theta)S_{if_{\text{bot}}}(t) + w_{\text{bot}}^H n(t) \qquad (18)$$

wherein $w_{\text{top}} = [w_1, w_2,...,w_{M1}]^T$ and $w_{\text{bot}} = [w_1, w_2,...,w_{M2}]^T$ are respectively the weight vector of the virtual imaging areas at the top and bottom of the screen, M1 and M2 are respectively the number of receiving elements in the two virtual imaging

areas, $A_{top}(\theta)$ and $A_{bot}(\theta)$ are respectively the receiving steering vector matrix of the two virtual imaging areas, $S_{if_{top/bot}}(t)$ is the echo signal of imaging grid unit points of the two virtual imaging areas, and $n(t)$ is the noise. As for the weight vector $w_m = a(\theta_n)$, the phase difference can be compensated that is caused by the different paths of the transmitted signals from each element reaching the receiving near-field area in the $\theta_m$ direction, so that the signals are coherently added at the near-field area in the $\theta_m$ direction, forming a transmission beam pointing in the $\theta_m$ direction. Further, the received signals $y(\hat{t})_{top}$ and $y(\hat{t})_{bot}$ are windowed to suppress sidelobes, and transformed into frequency domain signals by FFT; then, the frequency domain signals are trained through a CNN model to obtain sub near-field images.

Time domain signals of the virtual imaging area are transformed by FFT and trained by a CNN model to obtain sub near-field images through the following specific process: The frequency domain signals after FFT transformation are used as an input layer, which goes through several convolutional layers and is then flattened and outputted through a fully connected layer. The convolutional layer can be further divided into convolution and pooling. The convolution process involves convolving through a convolutional kernel and activating through an activation function. This process is essentially equivalent to a filter for feature extraction, which is like a CNN being able to "see" how pixel clusters form lines or curves. A deep neural network consists of multiple layers; in a next layer, the CNN "sees" how lines or curves form certain shapes step by step, until a complete near-field image is formed. This process requires training the CNN using frequency domain signals (frequency domain feature data) with multiple consecutive annotated near-field image sequence labels, which will not be repeated here.

With a CNN model, it is possible to construct a near-field image of a target object. Multiple virtual imaging area signals, after going through the Fourier transform and CNN model, can be constructed into multiple sub near-field images, thus forming a near-field image sequence.

Taking the carrier frequency of the transmitted signal at 60 GHz as an example, with a wavelength of $\lambda = 5$ mm, transmitting elements are arranged on a terminal device with a horizontal spacing of 77.5 mm and a vertical spacing of 15 mm. In the case of a vertical screen length of 150 mm, there are a total of N = 20 (2*10) transmitting elements separated on the vertical left and right sides of the screen. The horizontal and vertical spacings of the receiving elements are both $\lambda/2 = 2.5$ mm, and the receiving elements are arranged in the form of an area array at the top and bottom of the screen, respectively, with a total of M1 = 60 (2*30) receiving elements at the top and a total of M2 = 90 (3*30) receiving elements at the bottom. Therefore, the number of virtual elements in an MIMO array is N*M = 20*150, wherein the virtual elements have a virtual full array aperture and are received at the top and bottom of the screen, having a total element area of 150 mm*150 mm (a vertical array length of 150 cm, and a horizontal array length of 75 mm*2); thus, the aperture of an L array is 150 mm, and the boundary between the near and far fields is at $r \leq 2L^2/\lambda = 45$ m. With a reference element selected as a center point, planar scanning (or cylindrical scanning) is performed on imaging pixel grid units at the top and bottom of the screen within a range of $\pm 5$ m from the center point on the x, y and z axes, using phase compensation to avoid the aperture transit effect; and then 3D near-field imaging is performed through the Fourier transform and CNN, ultimately forming two 3D sub near-field images of virtual imaging areas at the top and bottom of the screen.

The two 3D sub near-field images, based on the receiving elements, collect both signals transmitted by the transmitting elements on both sides of the screen and signals reflected by the target, and therefore the overlap ratio is relatively large, and the phase correlation method mentioned above can be used to quickly complete image stitching. It is also possible to identify a matching point set through feature extraction, and then perform image registration, stitching, and fusion based on the geometric relationship of the matching point set. The integrated 3D image after fusion has higher resolution and more comprehensive information for gesture recognition, face recognition, and other purposes. To identify more accurate angles, multiple integrated 3D images are required to form multiple 3D image sequences. By using a faster region CNN on single or multiple 3D image sequences, regions of interest such as faces and gestures can be identified, and the CNN can be used again for the regions of interest to achieve face and gesture recognition. Compared with using the CNN to construct sub near-field images in virtual imaging areas, the faster region CNN adds a region candidate module, and then the CNN is applied again to the regions of interest, and an image classifier is constructed using datasets such as CFAR-10 for refined face and gesture recognition.

With the carrier frequency at 60 GHz, the number of virtual elements is overall relatively small, and it is necessary to add some elements to an AA around the screen as supplements; meanwhile, the low-frequency band of electromagnetic waves requires a terminal device with a larger screen, such as a tablet computer, to accommodate more elements. But overall, we cannot add too many elements and need to balance power consumption considerations. In terms of the final effect of the application, electromagnetic wave virtual array imaging of a terminal device can be used for detecting concealed targets, and used in weak light or no light environments, and has a certain degree of privacy protection (i.e. preventing profile pictures from being stolen under explicit videography, etc.).

Compared with the gesture and face recognition that can be achieved through MIMO virtual array 3D imaging, respiration and heartbeat detections do not require 3D imaging, and can be achieved by detecting, through an electromagnetic wave array, the phase changes of FNCW signals within a specific range, caused by small vibrations of the target. A minimum of one electromagnetic wave antenna transmitting element and one electromagnetic wave antenna receiving element can meet the requirements. By performing Doppler FFT on the obtained velocity for spectral analysis through the electromagnetic wave elements, various components can be obtained by analysis. Electromagnetic wave elements with a frequency of 60 GHz can be used to detect small movements as short as 1 mm. The reflection signal of human chest movement is phase modulated. Electromagnetic wave elements send multiple linear frequency modulation pulses at a predetermined time interval, and a distance corresponding to the position of the human chest is selected for distance FFT performed on each of the pulses, from which phase and then velocity are calculated. The heart rate of adults is in the range of 0.8 Hz-2 Hz, and the respiratory rate is in the range of 0.1 Hz-0.5 Hz. By selecting the velocity components of heart rate and respiratory rate in FFT and plotting their changes over time, the electrocardiogram and respiration spectrum can be obtained, with the peak values generated within one minute for each frequency as the heart rate and respiratory rate.

There is a relationship between phase change and displacement of the heart or chest as follows:

$$\Delta \phi_b \;=\; \frac{4\pi}{\lambda}\,\Delta R \qquad\qquad (19)$$

wherein $\Delta \phi_b$ is the phase change, and $\Delta R$ is the displacement change of the heart or chest. The heartbeat or respiration signal can be regarded as a sine signal $b(t)$ as follows with frequency and phase:

$$b(t) \;=\; e^{j\left(4\pi \frac{BR}{cT}t + \frac{4\pi}{\lambda}R\right)} \;=\; e^{j(f_b t + \phi_b)} \qquad\qquad (20)$$

wherein B is the scanning bandwidth, T is the scanning time period, and $b(t)$ is essentially also the result of heterodyne mixing between the FMCW wave $s(t)$ transmitted by the electromagnetic wave antenna transmitting elements and the echo $r(t)$ reflected by the target and received by the receiving elements, that is:

$$s(t) \;=\; e^{j\left(2\pi f_c t + \frac{\pi B}{T}t^2\right)} \qquad\qquad (21)$$

$$r(t) \;=\; e^{j\left(2\pi f_c(t-t_d) + \frac{\pi B}{T}(t-t_d)^2\right)} \qquad\qquad (22)$$

$$b(t) \;\approx\; s(t) \bullet r(t) \qquad\qquad (23)$$

By measuring small vibrations and performing FFT on $b(t)$ in the chest distance range, $\Delta \phi_b$ can be obtained; then the velocity component is calculated, and then respiration and heartbeat signals can be separated all at once through bandpass filtering.

In addition to respiration and heartbeat sensing, assisted positioning sensing can also be performed based on the above technologies.

The electromagnetic wave antenna array in the front of the screen is used for communication. There is no need to use all the electromagnetic wave imaging elements, and using only a small number of elements at the top and bottom and on both sides of the screen will be enough. Because electromagnetic wave antenna elements in a single direction are easily disturbed due to fast propagation attenuation, arranging the elements around the screen in four directions will achieve an ideal usage effect. Meanwhile, more importantly, electromagnetic wave communication in this situation can effectively improve the communication effect in front of the screen (usually the electromagnetic wave antenna in the back of the terminal device has a signal severely weakened due to screen obstruction).

Application scenario 2

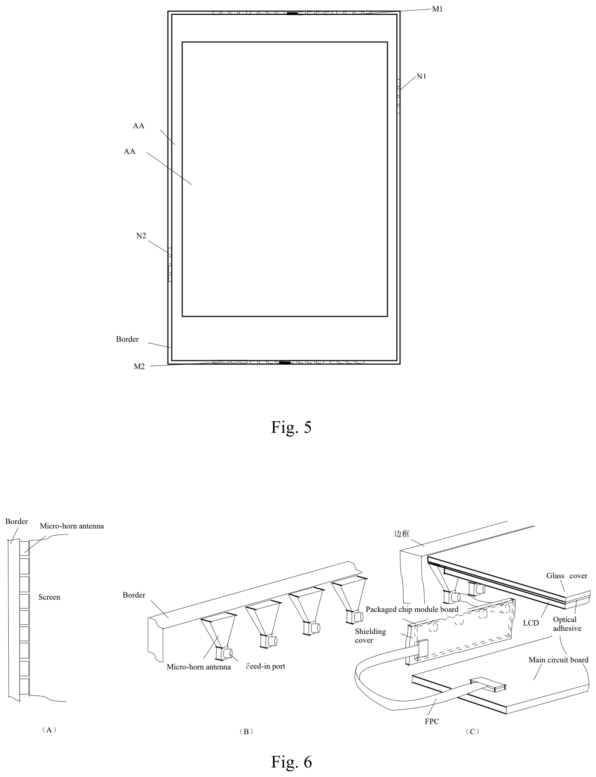

As shown in Fig. 5, in Application scenario 2, the transmitting antenna array comprises a first transmitting antenna array N1 and a second transmitting antenna array N2, and the receiving antenna array comprises a first receiving antenna array M1 and a second receiving antenna array M2. The first transmitting antenna array N1 can be set only in the non-AA on one side (on the right side as shown in the figure) of the upper half of the screen, the second transmitting antenna array N2 can be set only in the non-AA on the opposite side of N1 in the lower half of the screen (on the left side as shown in the figure, placed on the opposite side due to poor penetration of millimeter wave signals; arranging antenna arrays of millimeter waves in different directions can improve the anti-interference capability), and both the first transmitting antenna array N1 and the second transmitting antenna array N2 are composed of only a single column of elements. The first receiving antenna array M1 and the second receiving antenna array M2 are respectively located in the non-AAs at the top and bottom of the screen, and are both composed of only a single row of elements. The first receiving antenna array M1 receives the sensing echo sequence signal corresponding to the sensing detection sequence signal transmitted by the first transmitting antenna array N1, and the second receiving antenna array M2 receives the sensing echo sequence signal corresponding to the sensing detection sequence signal transmitted by the second transmitting antenna array N2. Based on the sensing echo sequence signals received in segments in the upper and lower halves of the screen, two virtual imaging areas corresponding to the upper and lower halves of the screen are formed.

A vertical column of few micro-horn antenna elements can be arranged as a transmitting antenna array in the gaps between the two sides of the screen and the border, wherein 4 elements are arranged at a spacing of full wavelength on each side to meet communication requirements. Electromagnetic wave antenna elements in an AoD form can be used to replace the elements in the non-AAs on the vertical side of the screen.

Compared with the vertical non-AAs, the non-AA areas in the gaps between the top and/or bottom of the screen and the border, or the non-AAs adjacent to them, can accommodate more micro-horns or electromagnetic wave antenna elements for receiving antenna arrays. When the horizontal size of the screen is 80 mm and the transmission carrier frequency is 60 GHz, the top and bottom of the screen can each accommodate 20-30 elements at a spacing of half wavelength.

It can be seen that the number of elements in the transmitting antenna array and receiving antenna array at this time is much smaller than that in Application scenario 1, which does not meet the accuracy requirements of segmented reception and imaging for a terminal device in a static state. In other words, the number of elements in the transmitting antenna array and receiving antenna array in Application scenario 2 is limited.

Further as shown in Fig. 6, the transmitting antenna arrays (N1, N2) and/or the receiving antenna arrays (M1, M2) include multiple micro-horn antennas with main structures extending along the inner surface of the border. Figs. 6(A) and 4(B) schematically show the micro-horn antenna between the screen and the border, respectively; and Fig. 6(C) schematically shows that a feed-in port of the micro-horn antenna is connected to a main circuit board of the terminal device through a packaged chip module board and a Floppy Printed Circuit (FPC). It can be seen that the micro-horn antenna in Fig. 6 is bonded in parallel with a Liquid Crystal Display (LCD) through optical adhesive under a glass cover plate. It should be understood that in Application scenario 2, the micro-horn antenna extends along the inner surface of the border, so the thickness of the border will not be increased too much. That is, without affecting the AA of the screen, the radiation of the micro-horn antenna in the direction of the user from the screen is achieved.

It should be noted that, compared with Application scenario 1, deploying few electromagnetic wave elements for imaging in Application scenario 2 can improve the existing virtual aperture compressed sensing technology, thereby enhancing the imaging accuracy and expand the range. Using a scanning method of swinging the terminal device, a virtual aperture large-scale antenna array with a greater degree of freedom is formed, and can achieve an imaging effect approaching that of a real aperture antenna with thousands of antenna elements. Due to the fact that the trajectory, obtained by users scanning by swinging the terminal device with their hands, is usually sparse and not completely regular, algorithms such as compressed sensing, tomography, and sparse aperture need to be used to process the sparsely sampled signal waveforms to obtain millimeter-level high-resolution images.

Correspondingly, taking the layout design shown in Fig. 5 as an example, the process of constructing a near-field image sequence comprises the following steps:

S'1: The transmitting antenna arrays on both sides of the screen transmit electromagnetic wave sequences, and the receiving antenna arrays at the top and bottom of the screen receive, in segments, the corresponding echo signal sequences.

Unlike the situation in Application scenario 1, the segmented reception here requires users to manually swing the terminal device, such as swinging in a Z-shaped pattern.

S'2: Division is performed on a segmented echo information array, which is formed by the receiving array receiving echoes in segments, to obtain several virtual imaging areas.

The initial division of the virtual imaging area is similar to that in the third mode in Application scenario 1, but it is different in that when the terminal device is swinging, multiple virtual imaging areas with partial overlap will be obtained by division. Therefore, the overlapping parts will be later used as a reference to stitch the near-field image sequences of the target object.

S'3: Division is further performed on each virtual imaging area to obtain several pixel grid unit points, and the amplitude and phase values of signals of each pixel grid unit point are obtained through the heterodyne mixing technology.

This can be similar to the situation in Application scenario 1, where the amplitude and phase values of signals of each pixel grid unit point are obtained by heterodyne mixing. However, considering the dynamic acquisition here, the processing speed of heterodyne mixing is relatively fast, requiring a higher configured processor.

S'4: Traversal is performed across each virtual imaging area to complete the image reconstruction of each virtual imaging area.

This is similar to the situation in Application scenario 1, but the traversal method here is much more complex; after heterodyne mixing and sidelobe suppression, it is also necessary to perform traversal by processing the sparsely sampled signal waveforms through algorithms such as compressed sensing, tomography, and sparse aperture. The use of compressed sensing, tomography, and sparse aperture is mainly aimed at reducing the instability of dynamic acquisition caused by manual Z-shaped up-and-down swing. In this respect, first, the signals collected at each dynamic moment are mapped, through compressed sensing, onto a 2D plane for image analysis; next, the 2D images obtained through the analysis are horizontally accumulated to produce 3D images using a method similar to the nuclear magnetic resonance tomography in medicine.

S'5: Image stitching and synthesis are performed on each virtual imaging area to achieve complete target image reconstruction.

As described in step S'1, although a method similar to that in the third mode in Application scenario 1 is adopted to obtain virtual imaging areas by division, since there may be repetitive parts in the continuous dynamic acquisition process, here the near-field image sequences of each virtual imaging area can be stitched based on the repetitive parts of each virtual imaging area, thereby obtaining a complete near-field image sequence of the target object.

The above is an exemplary introduction to the application of the information sensing method in this example. The comparison of the characteristics between Application scenario 1 and Application scenario 2 is as follows:

|  | Hardware configuration | Acquisition method | Imaging algorithm | Imaging quality | Power consumption |
|---|---|---|---|---|---|
| Application scenario 1 | Complex | The terminal device is in a static state | Simple | Higher | Higher |
| Application scenario 2 | Simple | The terminal device is in a swinging state | Complex | Lower | Lower |

In addition, in scenarios where users use terminal devices in a conventional manner, terminal communication overlaps with non-centralized functions such as respiration, heartbeat, and imaging sensing. Therefore, respiration, heartbeat and imaging detections can be performed in a time-sharing manner. Similarly, electromagnetic wave communication can also be performed together with these sensing functions in a time-sharing manner. In this way, the complexity of simultaneous communication and sensing is relatively reduced. Sensing, including imaging, respiration, heartbeat, and positioning sensing, is carried out through the transmission and reception by different electromagnetic wave arrays on the terminal screen, and communication is carried out through the interaction between a terminal electromagnetic wave array and a base station, with the former mainly using FMCW signals while the latter mainly using Orthogonal Frequency Division Multiplexing (OFDM) signals. Therefore, sensing and communication are carried out in the same electromagnetic wave element or array by using different signal forms in an integrated time-sharing manner, which allows the two functions to be perfectly achieved without interference with each other.

Meanwhile, due to the small number of elements required for communication, and respiration and heartbeat sensing, several elements can be selected from the imaging element array specifically for non-imaging purposes. The pixel grid unit points with imaging loss are filled with numerical interpolation of neighboring pixel grid unit points. This case is equivalent to different electromagnetic wave elements working simultaneously with FMCW signals and OFDM signals, respectively. Due to the minimal mutual interference caused by the differences in signal mechanisms, and due to the layout of elements arranged together, there is no substantial impact on imaging.

Alternatively, based on the integrated sensing and communication technology, when sensing or communication operates continuously in some manner, in order to avoid prolonged inoperability of the other function, an implementation approach can be adopted where electromagnetic wave antenna arrays take communication as an auxiliary in the sensing state and take sensing as an auxiliary in the communication state.

Besides, OFDM has low distance resolution only at long distances due to its high peak-to-average ratio; in an application scenario with a near range in front of the terminal screen, the performances of OFDM and FMCW are similar, so it is entirely possible to use OFDM for sensing; therefore, communication and sensing can be carried out in the same signal form, and then communication and sensing can be carried out simultaneously. With communication being the interaction between the terminal electromagnetic wave array and the base station array, and sensing being the interaction between the electromagnetic wave arrays on the screen, the electromagnetic wave receiving array, after simultaneously receiving the far-field echo of the signal transmitted by the base station and the near-field echo of the electromagnetic wave transmission array on the screen, separates the signals based on the time shift, Doppler frequency shift, and phase shift of the near-field and far-field echoes, and therefore communication and sensing are simultaneously achieved with the separated signals using the aforementioned sensing method.

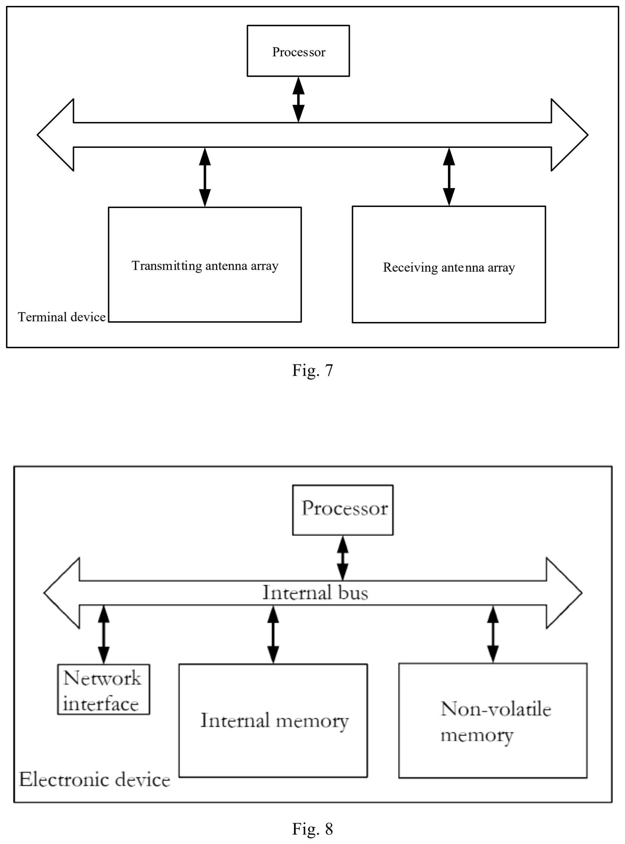

On the other hand, corresponding to the information sensing method shown in Fig. 1, the example of the present application also provides a terminal device. Fig. 7 is a schematic diagram of the structure of the terminal device, which includes a transmitting antenna array and a receiving antenna array of electromagnetic waves, as well as a processor. The transmitting antenna array and the receiving antenna array are set in a non-AA of the screen of the terminal device, and/or in the gap between the screen and the border.

The transmitting antenna array is used to transmit a sensing detection sequence signal.

The receiving antenna array is used to receive, in segments, a sensing echo sequence signal that is formed by means of reflection after the sensing detection sequence signal reaches a target object.

The processor is used to perform division to obtain a plurality of virtual imaging areas on the basis of the sensing echo sequence signal received in segments, wherein each of the plurality of virtual imaging areas is composed of pixel grid units. The processor is also used to, on the basis of signal parameters, corresponding to pixel grid units in each virtual imaging area, of the sensing echo sequence signal received in segments, generate a near-field image sequence relative to each virtual imaging area; the near-field image sequences corresponding to the plurality of virtual imaging areas are stitched together, thus obtaining the near-field image sequence corresponding to the target object.

Specifically, the transmitting antenna array in this example comprises a first transmitting antenna array N1 and a second transmitting antenna array N2, and the receiving antenna array comprises a first receiving antenna array M1 and a second receiving antenna array M2.

As shown in Fig. 2 or 3, the first transmitting antenna array N1 is set in non-AAs on both sides of the upper half of the screen, and the second transmitting antenna array N2 is set in non-AAs on both sides of the lower half of the screen; the first receiving antenna array M1 is set in a non-AA at the top of the screen, and the second receiving antenna array M2 is set in a non-AA at the bottom of the screen.

Considering energy consumption issues, there should not be too many elements in the antenna array. In an example, the number of elements of the first transmitting antenna array N1 and the second transmitting antenna array N2 in the column direction is less than or equal to 10, and the number of elements of the first receiving antenna array M1 and the second receiving antenna array M2 in the row direction is less than or equal to 20.

In an example, as shown in Fig. 5, to further reduce the number of elements in the antenna array, the first transmitting antenna array N1 can be set only in the non-AA on the left or right side of the upper half of the screen, the second transmitting antenna array N2 can be set only in the non-AA on the left or right side of the lower half of the screen, both the first transmitting antenna array N1 and the second transmitting antenna array N2 being composed of only a single column of elements; the first receiving antenna array M1 and the second receiving antenna array M2 are respectively located in the non-AAs at the top and bottom of the screen, and are both composed of only a single row of elements. This layout corresponds to Application scenario 2. The first receiving antenna array M1 receives the signals from the first transmitting antenna array N1. In an exemplary embodiment, the transmitting antenna arrays (N1, N2) and the receiving antenna arrays (M1, M2) can be set using the AoD technology. Alternatively, as shown in Fig. 6, at least some elements of the transmitting antenna arrays (N1, N2) and the receiving antenna arrays (M1, M2) can be set in the gap between the border of the terminal device and the screen, and the transmitting antenna arrays (N1, N2) and the receiving antenna arrays (M1, M2) each include multiple micro-horn antennas with main structures extending along the inner surface of the border.

In an example, the number of elements in the transmitting antenna arrays (N1, N2) and the receiving antenna arrays (M1, M2) is determined by the wavelength of electromagnetic waves and the width of the screen. For example, in the case of an electromagnetic wave of 81 GHz and a screen width of 80 mm, if the AoD technology is used, 30 elements at a spacing of half wavelength can be set for the first receiving antenna array M1 and the second receiving antenna array M2, and 4 elements can be set for the first transmitting antenna array N1 and the second transmitting antenna array N2. Alternatively, if a micro-horn antenna is used, the number of elements at a spacing of half wavelength in the first receiving antenna array M1 and the second receiving antenna array M2 is less than or equal to 16, and the number of elements in the first transmitting antenna array N1 and the second transmitting antenna array N2 is also 4.

In an example, based on the fact that both the millimeter wave sequence signal and the echo sequence signal are used for sensing user information, the transmitting antenna array and receiving antenna array of the terminal device can also be multiplexed as a communication antenna to achieve integrated sensing and communication.

For example, with the transmitting antenna array and the receiving antenna array being multiplexed as a communication antenna for the terminal device in a time-sharing manner, the transmitting antenna array uses the OFDM mode to transmit communication signals during a period of time and uses the FMCW mode to transmit sensing detection sequence signals during another period of time, and the receiving antenna array uses the OFDM mode to receive communication signals during a period of time and uses the FMCW mode to receive sensing echo sequence signals during another period of time.

For another example, with the transmitting antenna array and the receiving antenna array being simultaneously multiplexed as a communication antenna for the terminal device, the transmitting antenna array uses the OFDM mode to transmit communication signals and uses the FMCW mode to transmit sensing detection sequence signals, and the receiving antenna array uses the OFDM mode to receive communication signals and uses the FMCW mode to receive sensing echo sequence signals.

For another example, the transmitting antenna array uses the OFDM mode to transmit communication signals and sensing detection sequence signals, and the receiving antenna array also uses the OFDM mode to receive communication signals and sensing echo sequence signals.

Specifically, in the case of small terminal sizes, in order to achieve ideal imaging and other sensing purposes, regardless of whether the application scenario corresponds to Application scenario 1 or 2, or whether the antenna array is multiplexed as a communication antenna to achieve integrated sensing and communication, due to the long wavelength of millimeter waves, the large size of a single antenna element set in the non-AA of the screen will result in insufficient number of antenna arrays composed of multiple antenna elements, which will ultimately affect the sensing and imaging quality and even result in ineffective imaging; at this point, millimeter wave signals can be replaced with terahertz wave signals with smaller wavelengths to meet the requirements.

It should be understood that the terminal device in this example can serve as the executing subject of the method shown in Fig. 1, and therefore can implement the steps and functions of the method shown in Fig. 1, which will not be repeated here.

Fig. 8 is a schematic diagram of the structure of an electronic device provided in an example of the present application. As shown in Fig. 8, at the hardware level, the electronic device includes a processor, and optionally an internal bus, a network interface, and a memory. The memory may include an internal memory, such as a high-speed Random-Access Memory (RAM), and may also include a non-volatile memory, such as at least one disk storage. Of course, the electronic device may also include hardware required for other purposes.

The processor, network interface, and memory can be interconnected through an internal bus, which can be an Industry Standard Architecture (ISA) bus, a Peripheral Component Interconnect (PCI) bus, or an Extended Industry Standard Architecture (EISA) bus. The bus can be divided into an address bus, a data bus, a control bus, etc. For ease of representation, only one bi-directional arrow is used in Fig. 8, but it does not indicate that there is only one bus or one type of bus.

The memory is used to store computer programs. Specifically, the computer programs may include program codes that include computer operation instructions. The memory can include both an internal memory and a non-volatile memory, and provide computer programs to the processor.

Optionally, the processor reads the corresponding computer programs from the non-volatile memory into the internal memory and runs them, forming the terminal device shown in Fig. 7 at the logical level. Correspondingly, the processor executes programs stored in the memory, and is specifically used to perform the following operations:

transmitting a sensing detection sequence signal on the basis of the transmitting antenna array;
on the basis of the receiving antenna array, receiving, in segments, a sensing echo sequence signal which is formed by means of reflection after the sensing detection sequence signal reaches a target object;
performing division to obtain a plurality of virtual imaging areas on the basis of the sensing echo sequence signal received in segments, wherein each virtual imaging area is composed of pixel grid units; and
on the basis of signal parameters, corresponding to pixel grid units in each virtual imaging area, of the sensing echo sequence signal received in segments, generating a near-field image sequence of the target object relative to each virtual imaging area.

The electronic device of this example is configured with a transmitting antenna array and a receiving antenna array of electromagnetic waves. A sensing detection sequence signal is transmitted by the transmitting antenna array, and a sensing echo sequence signal, which is formed by means of reflection after the sensing detection sequence signal reaches a target object (a user), is received in segments by the receiving antenna array. Next, division is performed on the basis of the sensing echo sequence signal received in segments to obtain a plurality of virtual imaging areas, so as to determine the signal parameters, corresponding to pixel grid units in each virtual imaging area, of the sensing echo sequence signal received in segments, thereby performing image modeling based on the signal parameters of pixel grid units to generate a near-field image sequence relative to each virtual imaging area. Afterwards, by further stitching the near-field image sequences corresponding to these virtual imaging areas, a complete near-field image sequence of the target object can be obtained, based on which related AI applications such as face recognition, gesture recognition, and liveness detection can be executed. It can be seen that the electronic device in this example senses user information by transmitting and receiving electromagnetic waves through an antenna array, which does not significantly affect normal display of the screen compared with traditional sensing methods based on cameras and fingerprint sensors.

The information sensing method disclosed in the example shown in this specification can be applied to and implemented by a processor. The processor can be an integrated circuit chip with signal processing capabilities. In the implementation process, each step of the above method can be completed through integrated logic circuits of hardware or instructions of software in the processor. The processor can also be a general-purpose processor, including a Central Processing Unit (CPU), a Network Processor (NP), and so on. It can also be a Digital Signal Processor (DSP), an Application Specific Integrated Circuit (ASIC), a Field-Programmable Gate Array (FPGA), or other programmable logic devices, discrete gates or transistor logic devices, or discrete hardware components. The methods, steps, and logic diagrams disclosed in the example of the present application can be implemented or executed. The general-purpose processor can be a microprocessor or any conventional processor. The steps of the method disclosed in the example of the present application can be directly executed by a decoding processor as hardware, or executed by a combination of hardware and software modules in the decoding processor. The software module can be located in mature storage media in this field, such as a random access memory, a flash memory, a read-only memory, a programmable read-only memory or an electrically erasable programmable memory, and a register. The storage medium is located in the memory, and the processor reads the information from the memory and completes the steps of the above method in conjunction with its hardware.

Of course, in addition to the software implementation method, the electronic device described in this specification does not exclude other implementation methods, such as logic devices or a combination of software and hardware. That is, the executing subject of the following process flow is not limited to each logic unit, but can also be hardware or logic devices.

In addition, the example of the present application also proposes a computer-readable storage medium that stores one or more computer programs, including instructions. Optionally, the above instructions, when executed by a portable electronic device containing multiple application programs, can make the portable electronic device to execute the following steps of the method shown in Fig. 1:

transmitting a sensing detection sequence signal on the basis of the transmitting antenna array;
on the basis of the receiving antenna array, receiving, in segments, a sensing echo sequence signal which is formed by means of reflection after the sensing detection sequence signal reaches a target object;
performing division to obtain a plurality of virtual imaging areas on the basis of the sensing echo sequence signal received in segments, wherein each virtual imaging area is composed of pixel grid units; and
on the basis of signal parameters, corresponding to pixel grid units in each virtual imaging area, of the sensing echo sequence signal received in segments, generating a near-field image sequence of the target object relative to each virtual imaging area.

Those skilled in the art should understand that the examples described in this specification can be provided as methods, systems, or computer program products. Therefore, this specification may adopt an example of all hardware, an example of all software, or an example of software and hardware in combination. Moreover, this specification may adopt a computer program product implemented on one or more computer usable storage media (including but not limited to a disk storage, a CD-ROM, an optical storage, etc.) containing computer usable program codes.

The specific examples of this specification have been described above. Other examples are within the scope of the appended claims. In some cases, the actions or steps described in the claims may be executed in a different order than in the examples and can still achieve the desired results. In addition, the process depicted in the figures does not necessarily require a specific or continuous order to achieve the desired results. In some embodiments, multitasking and parallel processing are also possible or may be advantageous.

The above are only examples of this specification and are not intended to limit this specification. For those skilled in this art, this specification can have various changes and variations. Any modifications, equivalent substitutions, improvements, etc. made within the spirit and principle of this specification shall be included within the scope of the claims of this specification. In addition, all other examples obtained by those of ordinary skill in the art without carrying out creative work shall fall within the scope of protection of this document.

## Claims

1.  An information sensing method, based on electromagnetic waves and applied to a terminal device, the terminal device being configured with a transmitting antenna array and a receiving antenna array of millimeter or terahertz electromagnetic waves, wherein the method comprises:

    transmitting a sensing detection sequence signal on the basis of the transmitting antenna array;
    on the basis of the receiving antenna array, receiving, in segments, a sensing echo sequence signal which is formed by means of reflection after the sensing detection sequence signal reaches a target object;
    performing division to obtain a plurality of virtual imaging areas on the basis of the sensing echo sequence signal received in segments, with the plurality of virtual imaging areas each being composed of pixel grid units; and
    on the basis of signal parameters, corresponding to the pixel grid units in each virtual imaging area, of the sensing echo sequence signal received in segments, generating a near-field image sequence of the target object relative to each virtual imaging area.

2. The method according to claim 1, wherein
the near-field image sequences corresponding to the plurality of virtual imaging areas are stitched together to obtain a stitched near-field image sequence of the target object.

3. The method according to claim 1, wherein

there are no less than two transmitting antenna arrays and no less than two receiving antenna arrays; and the terminal device is provided with at least one of a first mode, a second mode or a third mode, which are as follows: in the first mode, each transmitting antenna array transmits the sensing detection sequence signals according to a consecutive time sequence, and each receiving antenna array separately receives the sensing echo sequence signals corresponding to the sensing detection sequence signals transmitted by each transmitting antenna array according to the consecutive time sequence;
in the second mode, each transmitting antenna array transmits the sensing detection sequence signals independently of each other, and each receiving antenna array receives the sensing echo sequence signals originating from each transmitting antenna array; and
in the third mode, the transmitting antenna arrays and the receiving antenna arrays are divided into groups corresponding to each other, wherein each transmitting antenna array transmits the sensing detection sequence signals independently of each other, and each receiving antenna array receives the sensing echo sequence signals originating from the transmitting antenna array in the corresponding group.

4. The method according to claim 3, wherein

the transmitting antenna array of the terminal device comprises a first transmitting antenna array and a second transmitting antenna array, and the receiving antenna array of the terminal device comprises a first receiving antenna array and a second receiving antenna array; and
performing division to obtain a plurality of virtual imaging areas on the basis of the sensing echo sequence signal received in segments, comprising:

when the terminal device adopts the first mode, division is performed to obtain the virtual imaging areas on the basis of the sensing echo sequence signal that is received by the first receiving antenna array and corresponding to the sensing detection sequence signal transmitted according to a consecutive time sequence, and on the basis of the sensing echo sequence signal that is received by the second receiving antenna array and corresponding to the sensing detection sequence signal transmitted according to a consecutive time sequence;
when the terminal device adopts the second mode, division is performed to obtain the virtual imaging areas on the basis of the sensing echo sequence signal originating from the first transmitting antenna array and received by the first receiving antenna array, the sensing echo sequence signal originating from the second transmitting antenna array and received by the first receiving antenna array, the sensing echo sequence signal originating from the first transmitting antenna array and received by the second receiving antenna array, and the sensing echo sequence signal originating from the second transmitting antenna array and received by the second receiving antenna array; and
when the terminal device adopts the third mode, division is performed to obtain the virtual imaging areas on the basis of the sensing echo sequence signal originating from the first transmitting antenna array and received by the first receiving antenna array, and the sensing echo sequence signal originating from the second transmitting antenna array and received by the second receiving antenna array.

5. The method according to claim 3, wherein
in the third mode, when the number of elements in the transmitting antenna array and the receiving antenna array is limited, including the fact that the number of elements in the transmitting antenna array and the receiving antenna array does not meet the accuracy requirements of segmented reception and imaging for the terminal device in a static state, the sensing echo sequence signal is received in segments by the receiving antenna array while the terminal device swings.

6. The method according to any of claims 1-5, wherein
before a near-field image sequence relative to each virtual imaging area is generated on the basis of signal parameters, corresponding to the pixel grid units in each virtual imaging area, of the sensing echo sequence signal received in segments, the method further comprises:

a heterodyne mixing signal of the pixel grid units in each virtual imaging area is determined based on a near-field spherical wavefront of the echo signal sequence received in segments;

a virtual array compensation vector is determined based on time delay of the elements in the receiving antenna array relative to the pixel grid units in each virtual imaging area, and the heterodyne mixing signal of the pixel grid units in each virtual imaging area is compensated based on the virtual array compensation vector; and

coherent superposition is performed on the compensated heterodyne mixing signal of the pixel grid units in each virtual imaging area, and signal parameters, corresponding to the pixel grid units in each virtual imaging area, of the sensing echo sequence signal received in segments are determined.

7.  The method according to any of claims 1-5, wherein
on the basis of signal parameters, corresponding to the pixel grid units in each virtual imaging area, of the sensing echo sequence signal received in segments, generating a near-field image sequence relative to each virtual imaging area comprises:

the signal parameters, corresponding to the pixel grid units in each virtual imaging area, of the sensing echo sequence signal received in segments are mapped to a spatial coordinate system for image scanning and modeling, thereby generating the near-field image sequence relative to each virtual imaging area;

and/or

Fourier transform is performed on the signal parameters, corresponding to the pixel grid units in each virtual imaging area, of the sensing echo sequence signal received in segments to obtain frequency domain feature data, which is then inputted into a Convolutional Neural Network CNN model to obtain the near-field image sequence relative to each virtual imaging area; wherein the CNN model is obtained through training based on the frequency domain feature data corresponding to a sample sensing echo sequence signal, and on a near-field image sequence label annotated by the sample sensing echo sequence signal.

8.  The method according to claim 2, wherein
before the near-field image sequences corresponding to the plurality of virtual imaging areas are stitched together to obtain a stitched near-field image sequence of the target object, the method comprises:
registration is performed on the near-field image sequences corresponding to at least some of the plurality of virtual imaging areas, wherein at least one of the following methods is adopted for the registration:

the near-field image sequences corresponding to the at least some of the virtual imaging areas are mapped to a frequency domain, and then a translation vector, relative to the frequency domain, of the near-field image sequences corresponding to the at least some of the virtual imaging areas is calculated based on a cross-power spectral density function; and based on the translation vector, registration is performed on the near-field image sequences corresponding to the at least some of the virtual imaging areas; and

a common feature point between the near-field image sequences corresponding to the at least some of the virtual imaging areas is determined based on a time domain; and based on the common feature point, registration is performed on the near-field image sequences corresponding to the at least some of the virtual imaging areas.

9.  The method according to any of claims 1-5, further comprising:
performing Fast Fourier Transform FFT on the sensing echo sequence signal received in segments, thus obtaining a frequency domain signal sequence that presents the relationship between chest distance of the target object and a pulse peak; and determining heartbeat signals and/or respiration signals of the target object based on a pre-set quantitative relationship between phase change in the frequency domain signal sequence and chest displacement.

10.  A terminal device, comprising a processor as well as a transmitting antenna array and a receiving antenna array of electromagnetic waves, the electromagnetic waves being millimeter waves or terahertz waves, wherein

the transmitting antenna array is used to transmit a sensing detection sequence signal;

the receiving antenna array is used to receive, in segments, a sensing echo sequence signal which is formed by means of reflection after the sensing detection sequence signal reaches a target object; and

the processor is used to perform division to obtain a plurality of virtual imaging areas on the basis of the sensing echo sequence signal received in segments, with each of the plurality of virtual imaging areas being composed of pixel grid units; and the processor is also used to, on the basis of signal parameters, corresponding to the pixel grid units in each virtual imaging area, of the sensing echo sequence signal received in segments, generate a near-field image sequence of the target object relative to each virtual imaging area.

11. The terminal device according to claim 10, wherein

the transmitting antenna array comprises a first transmitting antenna array and a second transmitting antenna array, the first transmitting antenna array being set in non-Active Areas (non-AAs) on both sides of the upper half of a screen, the second transmitting antenna array being set in non-AAs on both sides of the lower half of the screen; and
the receiving antenna array comprises a first receiving antenna array and a second receiving antenna array, the first receiving antenna array being set in a non-AA at the top of the screen, the second receiving antenna array being set in a non-AA at the bottom of the screen.

12. The terminal device according to claim 10, wherein

at least some elements of the transmitting antenna array and the receiving antenna array are set below the screen based on Antenna on Display AoD technology;
alternatively,
at least some elements of the transmitting antenna array and the receiving antenna array are set in a gap between a border of the terminal device and the screen, wherein when the transmitting antenna array and the receiving antenna array are set in the gap between the border of the terminal device and the screen, both the transmitting antenna array and the receiving antenna array comprise multiple micro-horn antennas with main structures extending along the inner surface of the border.

13. The terminal device according to claim 11, wherein

with the transmitting antenna array and the receiving antenna array being multiplexed as a communication antenna for the terminal device in a time-sharing manner, the transmitting antenna array uses an Orthogonal Frequency Division Multiplexing OFDM mode to transmit communication signals and uses a Frequency Modulated Continuous Wave FMCW mode to transmit the sensing detection sequence signals, and the receiving antenna array uses the OFDM mode to receive the communication signals and uses the FMCW mode to receive the sensing echo sequence signals;
alternatively,
with the transmitting antenna array and the receiving antenna array being simultaneously multiplexed as the communication antenna for the terminal device, and with the terminal device being configured with a sensing mode and a communication mode, the transmitting antenna array uses the OFDM mode to transmit the communication signals and the sensing detection sequence signals, and the receiving antenna array uses the OFDM mode to receive the communication signals and the sensing echo sequence signals.

14. An electronic device, comprising a memory for storing one or more computer programs, and a processor for loading one or more computer programs to execute the method according to any of claims 1-9.

15. A computer-readable storage medium, storing one or more computer programs thereon, wherein the one or more computer programs, when executed by the processor, implement the method according to any of claims 1-9.

Transmit a sensing detection sequence signal on the basis of a transmitting antenna array — S102

On the basis of a receiving antenna array, receive, in segments, a sensing echo sequence signal which is formed by means of reflection after the sensing detection sequence signal reaches a target object — S104

Perform division to obtain a plurality of virtual imaging areas on the basis of the sensing echo sequence signal received in segments, wherein each virtual imaging area is composed of pixel grid units — S106

On the basis of signal parameters, corresponding to pixel grid units in each virtual imaging area, of the sensing echo sequence signal received in segments, generate a near-field image sequence of the target object relative to each virtual imaging area — S108

Fig. 1

Fig. 2

M1

N1

N1

Border

Non-AA

AA

N2

N2

N2

Border

M2

Fig. 3

TX1    TX2

RX1  RX3  RX5
RX2 RX4 RX6

TX1

Virtual imaging area

R2

R1

R8

R7

Fig. 4

Fig. 5

Fig. 6

Fig. 7

Fig. 8

## INTERNATIONAL SEARCH REPORT

| International application No. |
| --- |
| **PCT/CN2024/079829** |

**A.    CLASSIFICATION OF SUBJECT MATTER**

G01S13/90(2006.01)i

According to International Patent Classification (IPC) or to both national classification and IPC

**B.    FIELDS SEARCHED**

Minimum documentation searched (classification system followed by classification symbols)

IPC： G01S

Documentation searched other than minimum documentation to the extent that such documents are included in the fields searched

Electronic data base consulted during the international search (name of data base and, where practicable, search terms used)

CNABS; CNTXT; VEN; EPTXT; USTXT; WOTXT; CNKI; IEEE: 雷达, 天线, 发射, 接收, 序列, 回波, 成像, 像素, 图像, 拼接, 网格, 近场, 近距离, 终端, 手机, 电子设备, 电子产品, MIMO, radar, antenna?, imag+, stitch+, grid+, near field, terminal?, phone?

**C.    DOCUMENTS CONSIDERED TO BE RELEVANT**

| Category* | Citation of document, with indication, where appropriate, of the relevant passages | Relevant to claim No. |
| --- | --- | --- |
| Y | CN 112649806 A (XIDIAN UNIVERSITY) 13 April 2021 (2021-04-13) description, paragraphs [0002]-[0153], and figures 1-17 | 1-15 |
| Y | CN 108828592 A (INSTITUTE OF ELECTRONICS, CHINESE ACADEMY OF SCIENCES) 16 November 2018 (2018-11-16) description, paragraphs [0005]-[0118], and figures 1-5b | 1-15 |
| A | CN 113495267 A (BEIJING XIAOMI MOBILE SOFTWARE CO., LTD.) 12 October 2021 (2021-10-12) entire document | 1-15 |
| A | CN 116125469 A (SHENZHEN AOPU HAOXIN TECHNOLOGY PARTNERSHIP (LIMITED PARTNERSHIP)) 16 May 2023 (2023-05-16) entire document | 1-15 |
| A | US 2019128999 A1 (THE CURATORS OF THE UNIVERSITY OF MISSOURI) 02 May 2019 (2019-05-02) entire document | 1-15 |

☐ Further documents are listed in the continuation of Box C.       ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **05 June 2024** | **12 June 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2024/079829**

| Patent document cited in search report | | | Publication date (day/month/year) | Patent family member(s) | | | Publication date (day/month/year) |
|---|---|---|---|---|---|---|---|
| CN | 112649806 | A | 13 April 2021 | None | | | |
| CN | 108828592 | A | 16 November 2018 | None | | | |
| CN | 113495267 | A | 12 October 2021 | None | | | |
| CN | 116125469 | A | 16 May 2023 | None | | | |
| US | 2019128999 | A1 | 02 May 2019 | US | 11009585 | B2 | 18 May 2021 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310705921